# EUROPEAN PATENT SPECIFICATION

(11) **EP 1 568 546 B1**
(45) Date of publication and mention of the grant of the patent: **24.01.2007**
(21) Application number: 05003436.2
(22) Date of filing: 17.02.2005
(51) Int. Cl.: B60R 21/16, B60R 21/26, B60R 21/20

(54) **Curtain airbag with cascade inflator**
Seitenairbag mit Kaskaden-Gasgenerator
Airbag rideau avec générateur de gaz en cascade

(30) Priority: 24.02.2004 US 546953 P
(43) Date of publication of application: 31.08.2005
(73) Proprietor: TAKATA CORPORATION, Minato-ku, Tokyo 106-8510 (JP)
(72) Inventor: Sakata, Yoshiaki, Minato-ku Tokyo 106-8510 (JP)
(74) Representative: Banzer, Hans-Jörg

(56) References cited:
- DE-A1- 4 231 522
- DE-A1- 4 307 175
- DE-A1- 19 613 133
- DE-C1- 4 134 995
- US-A1- 2002 180 193
- US-A1- 2003 178 820

## Description

The present invention relates to an airbag device comprising a curtain airbag.

Airbags are used as safety devices in vehicles. It is well known to provide airbags to protect an occupant during a head-on or broadside collision. Conventional airbags inflate upon sensing predetermined conditions such as an impact or sudden deceleration.

Conventional airbags may be positioned along the roof rail line of a vehicle so that the airbag may inflate in a downwardly direction in a curtain like manner. Such conventional curtain airbags protect an occupant's head during a broadside collision. Conventional curtain airbags generally inflate rapidly away from the roof rail line between the occupants and the vehicle side adjacent to the occupants.

Generally, conventional airbags are inflated by an inflator which fills the airbag with a gas upon the sensing of a predetermined condition. Conventional airbag inflators are positioned at an end of the airbag adjacent the rear end portion of the vehicle. A drawback of such conventional airbag inflator setup is that it is difficult to quickly and uniformly inflate and deploy the airbag. Generally, conventional curtain airbags are long and narrow which increases the difficulty in uniformly inflating the airbag.

In an attempt to increase the efficiency of the inflation, curtain airbags have been developed to include certain non-inflated areas, as can be seen for example in U.S. Patent No. 6,530,595. Curtain airbags devices may include pipe or conduit to distribute the inflation gases within the airbag, increasing the cost and labor required to install such airbag devices.

An airbag device according to the preamble of claim 1 having an inflator tube with two charges placed inside the airbag is known from DE 196 13 133 A1.

In other instances, curtain airbags may include an extended inflator that is bent in order to position the inflator properly within the airbag. These bent inflators must generally be tailored for each specific vehicle, which is generally a significant cost. Furthermore, the lengthy inflators may be heavy and cumbersome, making installation time-consuming and difficult.

Thus, it is the object of the invention to solve the problems described above.

According to the invention, this object is achieved by an airbag device as defined in claim 1. The dependent claims define preferred and advantageous embodiments of the invention.

### SUMMARY OF THE INVENTION

According to the embodiment of the present invention, an airbag device according to claim 1 is provide.

It is to be understood that both the foregoing general description and the following detailed description are exemplary and explanatory only, and are not restrictive of the invention as claimed.

### BRIEF DESCRIPTION OF DRAWINGS

These and other features, aspects, and advantages of the present invention will become apparent from the following description, appended claims, and the accompanying exemplary embodiment shown in the drawings, which is briefly described below.
Figure 1 is a sectional view of an airbag device according to an embodiment of the present invention.
Figure 2 is a cross-sectional view of line I-II of the airbag device of Figure 1.
Figure 3 is a view of the airbag device of Figure 1.
Figure 4 is a sectional view of an airbag device of another embodiment not according to the present invention.
Figure 5 is a view of the airbag device of Figure 4.
Figure 6 is a cross-sectional view of line I'-II' of the airbag device of Figure 4.
Figure 7 is view of an airbag device of another embodiment not according to the present invention.
Figure 8 is a view of an airbag device of another embodiment not according to the present invention.
Figure 9 is a perspective view of an airbag device of another embodiment not according to the present invention.
Figure 10 is a schematic view of another embodiment not according to the present invention.

### DETAILED DESCRIPTION

Hereinafter, the embodiment of the present invention will be described with reference to the attached drawings 1-3.

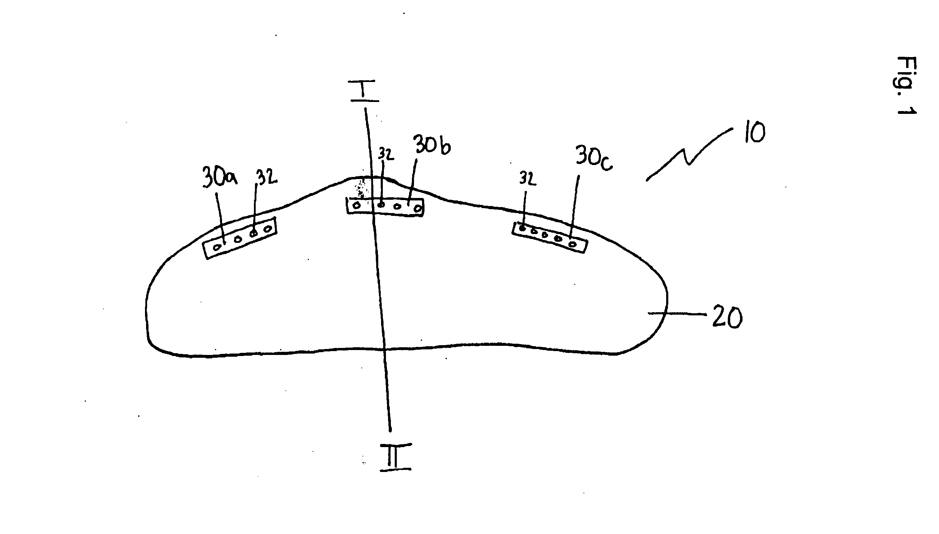

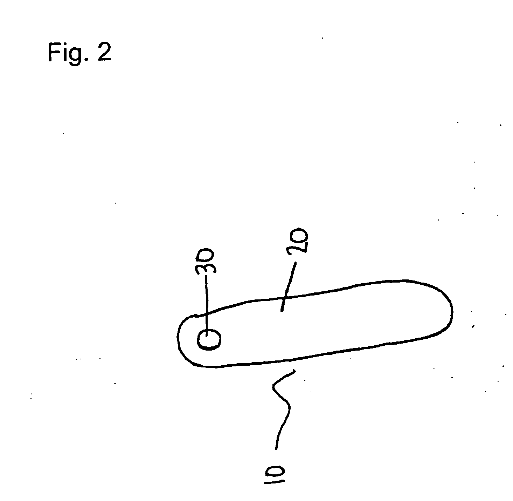

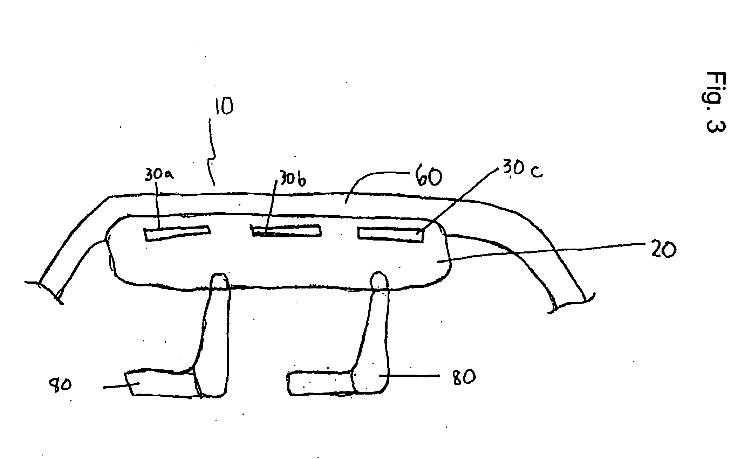

An airbag device 10 of the embodiment of the present invention is shown in Figures 1-3. The airbag device includes an airbag 20 and a inflator 30. The airbag 20 is a curtain airbag, disposed between the roofline 60 of a vehicle and an occupant. The curtain airbag 20 may be mounted along the roof line 60 of the vehicle.

The curtain airbag 20 is configured to deploy down from the roof line 60 of the vehicle and inflate between a side portion of the vehicle near an occupant and the occupant. The curtain airbag 20 is configured to provide protection for the occupant along the side of the vehicle between the front and rear pillars of the vehicle.

The airbag device 10 includes an inflator 30 positioned inside of the airbag 20. The inflator is a cascade type inflator. An exemplary cascade type inflator is disclosed in the PCT published application WO 00/32447. Inflation gases flow from the inflator 30, out along the length of the inflator 30 and at substantially the same rate. The inflator 30 restricts the flow of the inflation gases to a desired rate, direction and pressure.

The present invention also includes an embodiment of an inflator containing a gas generant or propellant. According to yet another embodiment the inflator may contain a decomposing type material as the source of the pressurized gas for the airbag.

Each inflator may contain a gas generant or propellant 300. Each inflator may also contain a standard igniter or initiator assembly. The igniter receives a signal from a firing circuit or controller in order to initiate operation of the inflator.

The propellant charge or gas generant may extend for all or most of the length of the inflator thereby facilitating a substantially uniform gas generation once the propellant is ignited. The propellant material may be selected from known propellants such as disclosed in U.S. Patent Application Publication 2001/0045735 A1.

The inflator 30 has a series of holes 32 to serve as exhaust ports which control release of the inflation gases produced by the inflator 30. The inflator 30 includes a propellant for generating the inflation gases when activated by an ignition assembly.

The inflator 30 is divided. That is, the inflator 30 is divided to include different sections within the airbag. The divided inflator 30 has at least three sections 30a, 30b, 30c located along the length of the airbag 20 at varying intervals. However, the number of sections of the divided inflator 30 may vary. For instance, there may be four sections of the divided inflator 30. By dividing the inflator 30, the inflator 30 may not have to be bent in order to position the inflator 30 within the airbag 20 and mount the airbag device 10 in a vehicle.

The divided inflator 30 may be mounted along the roof line 60 of the vehicle.

Ignition of the inflator 30 is activated upon the sensing of predetermined conditions. A seat weight sensor (not shown) is generally disposed in the vehicle seat 80 and determines the weight of an occupant, and may also determine other conditions, such as location and position in the seat 80. Output from the seat weight sensor controls the status of the airbag 20 inflation, thus determining the rate of deployment and force required to protect the occupant.

A controller or electronic control unit (ECU) 50 may be utilized to control the deployment of the airbag, as can be seen in Figure 1. The ECU 50 may receive input or information from a variety of sources. For example, the scope of the present invention includes detecting the status of the vehicle occupants using a seat weight sensor, a Motorized Seat Belt (MSB), a sensor for measuring the pulled out length of a seat belt webbing, a proximity sensor (e.g., capacitance type), a CCD camera, an optical sensor, an ultrasonic type sensor, a magnetic field sensor, a 3D scan system, an acceleration system or any other sensor that can detect the status of the occupant. The status of the occupants can be provided to the ECU 50.

The ECU 50 also may receive inputs from other sensors and/or systems to determine the status of the vehicle and the conditions in which the vehicle is operating. For example, the ECU 50 may receive additional input from a pre-crash sensor, a front or side impact sensor, a MSB, a proximity sensor, an acceleration sensor, a GPS navigation system, a system for monitoring the conditions outside the vehicle such as weather or lighting (e.g., day or night conditions); or any other sensor or system that may be suitable for detecting conditions affecting the vehicle such as an approaching object, vehicle or pedestrian.

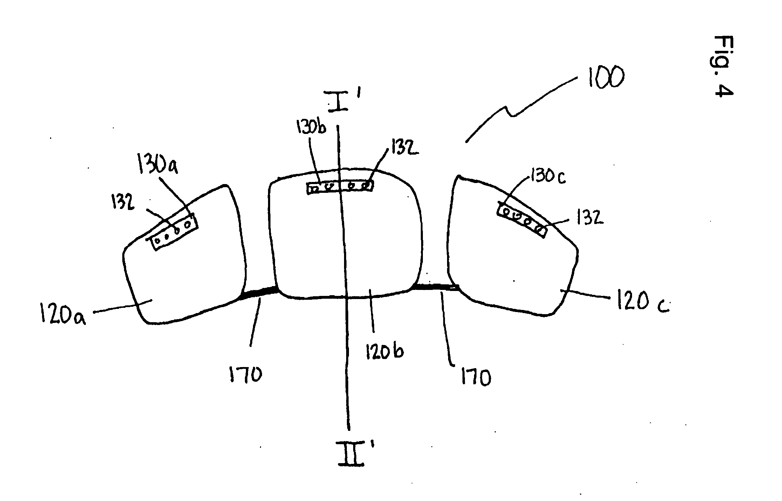

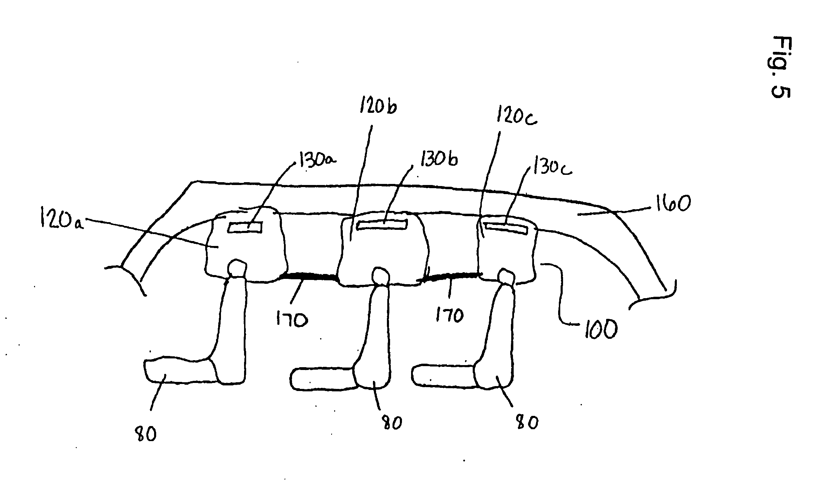

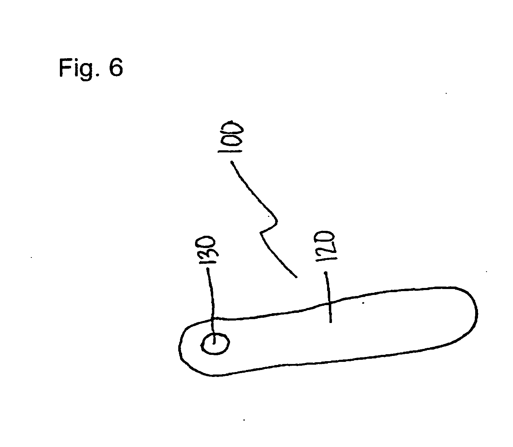

The ECU 50 signals the ignition assembly that the airbag 20 should be deployed upon sensing predetermined conditions, such as sudden deceleration or an impact. The ECU 50 may also receive information from various sensors regarding the status or position of the occupant. The ECU 50 and the various sensors and systems described above may be included in the exemplary embodiments shown in Figures 4-9.

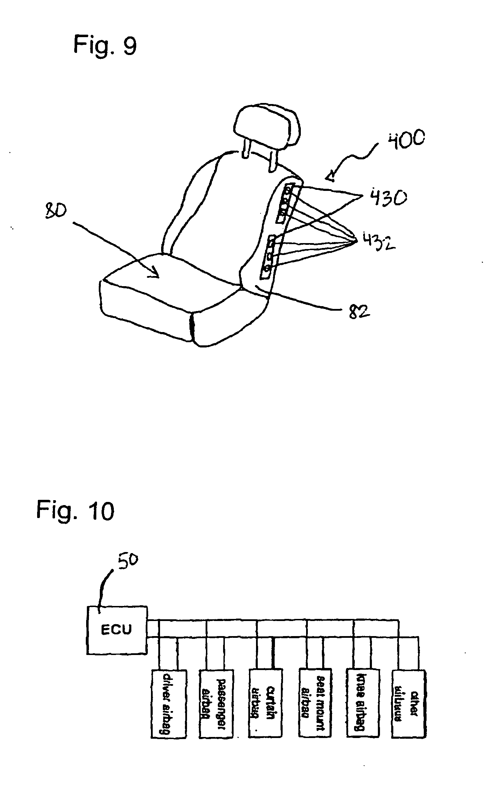

In another embodiment not according to the invention, each airbag device 10, 100, 200, 300, 400 can be controlled by a single ECU 50, such as shown in Figure 10. The ECU 50 can control a driver, passenger, curtain, seat-mounted, knee or other airbag device. Additionally, the ECU 50 can control a seat belt retractor or pretensioner (not shown) or any other safety device installed in a vehicle.

The ECU 50, via a BUS system shown in Figure 10, sends signals to the airbag devices and their respective inflators to deploy a particular device, a combination of devices, or all of the airbag devices. The ECU 50 determines which cascade inflator should be ignited during a crash event based on occupant and vehicle status.

Figures 4-6 show an alternative embodiment not according to in which the airbag device 100 may have a plurality of airbags 120. The airbag device may provide coverage to occupants in seats of three rows. That is, the airbag 120a protects an occupant in a first row, airbag 120b protects an occupant in a second row, and airbag 120c protects an occupant in a third row.

The airbags 120a-120c may be joined by a connecting strip 170. The connecting strip 170 joins the airbags 120a-120c at a bottom side of each airbag 120a-120c (in the vehicle floor direction when the airbags are deployed). The airbags 120a-120c may be folded separately and arranged with each other and in the final stage of assembly the connecting strip 170 is attached to join the airbags 120a-120c together.

The airbag device includes an inflator 130. The inflator is preferably a cascade type inflator as described above. Each airbag 120a-120c includes a separate inflator 130a-130c. The sections 130a-130c of the inflator 130 may include a series of holes 132 to serve as exhaust ports. The holes 132 control the release of the inflation gases produced by the inflator 130a-130c. Ignition of the inflator and, thus, each section of the divided inflator, is controlled by the ECU 50. The ECU 50 may operate as described above with regard to Figs. 1-3.

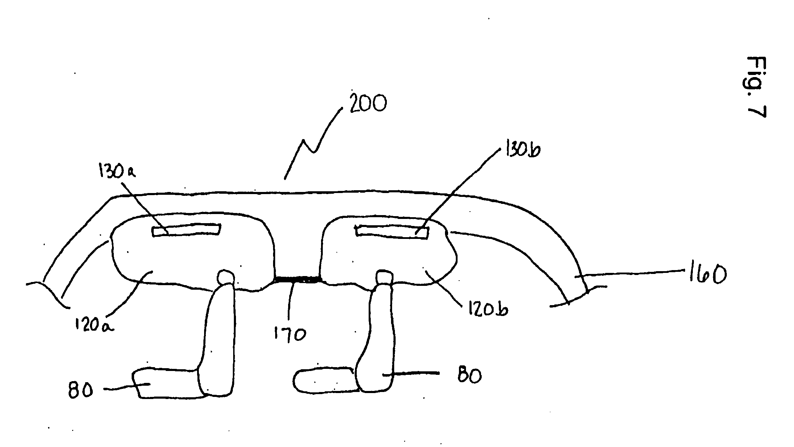

In another embodiment of not according to the present invention, as shown in Figure 7, the airbag device 200 may comprise two airbags 120a, 120b for protecting occupants seated in two rows. The deployment of each airbag may be separately controlled by the ECU 50. The airbag device 200 may include any other suitable number of airbags 120 for protection of an occupant in a vehicle. The scope of this embodiment includes separately controlling each of the inflator.

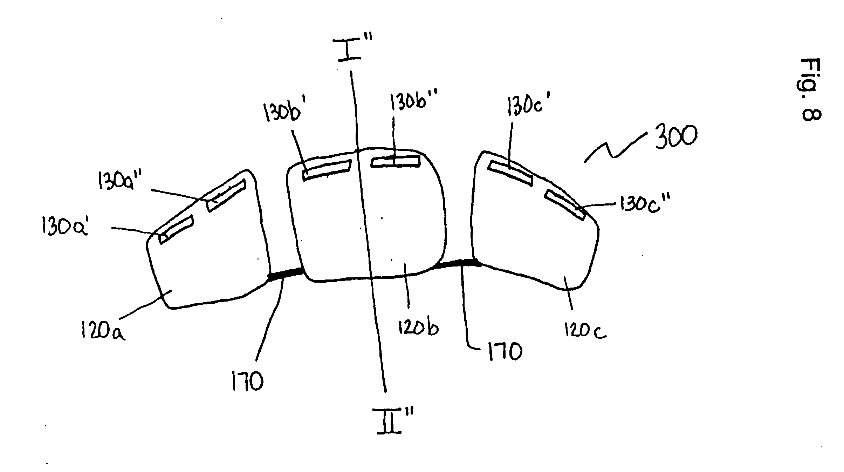

In an alternative embodiment not according to the present invention shown in Figure 8, the inflator 130 may be divided into different sections 130a', 130a", 130b', 130b", 130c', 130c" within each airbag 120a-120c. Further, any suitable number of sections may be installed within the airbag device 300 for proper inflation of the airbag 120a-120c.

Dividing the inflator enables the inflator to be small and light in weight. Further, the inflator may be mounted in a variety of vehicle models.

In another embodiment not according to the present invention shown in Figure 9, the airbag device 400 is a seat-mounted side airbag positioned along a side 82 of an occupant seat 80. A divided inflator 430 with multiple cascade inflators can be positioned along the side 82 of the seat 80. The airbag device 400 can include a single airbag or multiple, connected airbags that inflate along a side 82 of the seat 80, between the occupant and an interior wall of a vehicle (the door side of a vehicle).

The multiple airbags can be connected as shown above in the embodiment of Figures 4-6. Alternatively, the single airbag can be connected as shown in the embodiment not according to the present invention of Figures 1-3. The inflator 430 can also include a series of holes 432 to serve as exhaust ports. The exhaust ports 432 control release of the inflation gases of the inflator 430. The cascaded, multiple inflators 430 can be positioned in a single airbag. Multiple airbags can be used with different, linked inflators 430.

## Claims

1. An airbag device, comprising:
a curtain airbag (20) configured to deploy along an interior side of a vehicle, and a divided inflator (30) consisting of a plurality of inflators (30a, 30b, 30c) each of the plurality of inflators (30a, 30b, 30c) having a series of holes (32) to serve as exhaust ports which control the release of the inflation gases produced by the respective inflator (30a, 30b, 30c), said plurality of inflators (30a, 30b, 30c) being positioned along a length of the airbag (20) within the airbag (20), **characterized in that** the plurality of inflators (30a, 30b 30c) are at least three separate inflators that are spaced along the length of the curtain airbag (20) at varying intervals.

2. The airbag device according to claim 1, further comprising a controller (50) that controls the deployment of the airbag (20).

3. The airbag device according to claim 2, wherein the controller (50) sends a separate initiation signal to each inflator (30a, 30b, 30c).

4. The airbag device according to any one of claims 1-3, wherein the airbag device (10) is mounted along the roof line (60) of a vehicle.

5. The airbag device according to any one of claims 1-4, wherein each of the separate inflators (30a, 30b, 30c) is of linear shape.

## Patentansprüche

1. Airbagvorrichtung umfassend:
einen Vorhangairbag (20), welcher derart ausgestaltet ist, dass er sich entlang einer inneren Seite eines Fahrzeuges entfaltet, und eine geteilte Aufblasvorrichtung (30), welche aus mehreren Aufblasvorrichtungen (30a, 30b, 30c) besteht, wobei jede der mehreren Aufblasvorrichtungen (30a, 30b, 30c) eine Reihe von Löchern (32) aufweist, um als Ablassöffnungen zu dienen, welche das Ablassen der Aufblasgase steuern, welche durch die entsprechende Aufblasvorrichtung (30a, 30b, 30c) erzeugt werden, wobei die mehreren Aufblasvorrichtungen (30a, 30b, 30c) entlang einer Länge des Airbags (20) innerhalb des Airbags (20) angeordnet sind, **dadurch gekennzeichnet, dass** die mehreren Aufblasvorrichtungen (30a, 30b, 30c) mindestens drei getrennte Aufblasvorrichtungen sind, welche entlang der Länge des Vorhangairbags (20) mit verschiedenen Abständen beabstandet sind.

2. Airbagvorrichtung nach Anspruch 1, weiter eine Steuerung (50) umfassend, welche das Entfalten des Airbags (20) steuert.

3. Airbagvorrichtung nach Anspruch 2, wobei die Steuerung (50) ein separates Zündsignal zu jeder Aufblasvorrichtung (30a, 30b, 30c) sendet.

4. Aufblasvorrichtung nach einem der Ansprüche 1-3, wobei die Airbagvorrichtung (10) entlang der Dachlinie (60) eines Fahrzeugs montiert ist.

5. Airbagvorrichtung nach einem der Ansprüche 1-4, wobei jeder der getrennten Aufblasvorrichtungen (30a, 30b, 30c) eine lineare Form aufweist.

## Revendications

1. Dispositif de coussin gonflable ou d'airbag, comprenant :
- un coussin gonflable rideau (20) configuré pour se déployer le long d'un côté intérieur d'un véhicule, et un organe de gonflage divisé (30) composé d'une pluralité de gonfleurs (30a, 30b, 30c), chacun parmi la pluralité de gonfleurs (30a, 30b, 30c) présentant une série de trous (32) pour servir d'orifices d'échappement qui contrôlent la libération des gaz de gonflage produits par le gonfleur respectif (30a, 30b, 30c), ladite pluralité de gonfleurs (30a, 30b, 30c) étant positionnée sur la longueur du coussin gonflable (20) à l'intérieur du coussin gonflable (20), **caractérisé en ce que** la pluralité de gonfleurs (30a, 30b, 30c) est constituée d'au moins trois gonfleurs séparés qui sont espacés sur la longueur du coussin gonflable rideau (20) à des intervalles variables.

2. Dispositif de coussin gonflable selon la revendication 1, comprenant en outre un contrôleur (50) qui contrôle le déploiement du coussin gonflable (20).

3. Dispositif de coussin gonflable selon la revendication 2, dans lequel le contrôleur (50) envoie un signal de déclenchement distinct à chaque gonfleur (30a, 30b, 30c).

4. Dispositif de coussin gonflable selon l'une quelconque des revendications 1 à 3, dans lequel le dispositif de coussin gonflable (10) est monté le long de la ligne de toit (60) d'un véhicule.

5. Dispositif de coussin gonflable selon l'une quelconque des revendications 1 à 4, dans lequel chacun des gonfleurs séparés (30a, 30b, 30c) présente une forme linéaire.
